# EUROPEAN PATENT APPLICATION

(11) **EP 2 975 222 A1**
(43) Date of publication of application: **20.01.2016**
(21) Application number: 15176674.8
(22) Date of filing: 14.07.2015
(51) Int. Cl.: F01D 9/04

(54) **COOLED POCKET IN A TURBINE VANE PLATFORM**

(30) Priority: 14.07.2014 US 201462023991 P
(71) Applicant: United Technologies Corporation, Hartford, CT 06101 (US)
(72) Inventor: BANGERTER, James P., Manchester, CT Connecticut 06040 (US); PAAUWE, Corneil S., Glastonbury, CT Connecticut 06033 (US)
(74) Representative: Leckey, David Herbert

(57) **Abstract**

An airfoil (62) includes a platform (64) including a pocket (72), a continuous solid cover plate (74) bonded over the pocket (72), and a plurality of apertures (80, 82) in the platform (64) in fluid communication with the pocket (72) and adjacent the continuous solid cover plate (74). A gas turbine engine including the airfoil and a method of cooling an article of a gas turbine engine are also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The compressor or turbine sections may include vanes mounted on vane platforms. The vanes may require cooling. Some areas that require cooling cannot be reached by impingement cooling. Therefore, the vane platforms may include "cavities" to provide cooling air to the vanes. The cavities may be created in the platforms during casting of the platforms.

### SUMMARY

In a featured embodiment, an airfoil includes a platform including a pocket, a continuous solid cover plate bonded over the pocket, and a plurality of apertures in the platform in fluid communication with the pocket and adjacent the continuous solid cover plate.

In another embodiment according to the previous embodiment, the cover plate includes a contour extending into the pocket to define a height of the pocket.

In another embodiment according to any of the previous embodiments, the cover plate is bonded over the pocket by being welded to the platform.

In another embodiment according to any of the previous embodiments, a total cross-section of the plurality of apertures is less than approximately 30% of a cross-section of the pocket.

In another embodiment according to any of the previous embodiments, the plurality of apertures comprises a first set of apertures adjacent a first side of the cover plate and a second set of apertures adjacent a second side of the cover plate, the second side being opposite the first side.

In another embodiment according to any of the previous embodiments, the pocket includes a heat-transfer-enhancing surface feature.

In another embodiment according to any of the previous embodiments, a first side of the platform is adjacent a gas path, and where in the pocket is in a second side opposite the first side.

In another embodiment according to any of the previous embodiments, a height of the pocket is substantially uniform.

In another featured embodiment, a gas turbine engine includes a compressor section, a turbine section downstream from the compressor section, and a combustor section in communication with the compressor section and the turbine section. At least one of the compressor and turbine sections includes a platform including a pocket in a first side of the platform, an airfoil extending from a second side of the platform opposite the first side, a continuous solid cover plate bonded over the pocket, and a plurality of apertures in the platform adjacent the continuous solid cover plate in fluid communication with the pocket.

In another embodiment according the previous embodiment, the plurality of apertures comprises a first set of apertures adjacent a first side of the cover plate and a second set of apertures adjacent a second side of the cover plate, the second side being opposite the first side.

In another embodiment according to any of the previous embodiments, cooling air is supplied to the first set of apertures from the compressor section.

In another embodiment according to any of the previous embodiments, the first side of the platform is radially inward from the second side with respect to a longitudinal axis of the gas turbine engine.

In another embodiment according to any of the previous embodiments, the platform is a first platform, and further comprising a second platform, the airfoil supported between the first and second platforms.

In another embodiment according to any of the previous embodiments, the first platform is radially inward from the second platform with respect to a longitudinal axis of the gas turbine engine.

In another embodiment according to any of the previous embodiments, the airfoil is cantilever-mounted on the platform.

In another embodiment according to any of the previous embodiments, the platform and airfoil are in the turbine section.

In another featured embodiment according to any of the previous embodiments, a method of cooling an article of a gas turbine engine includes the steps of supplying cooling air to a pocket in a platform covered by a continuous solid cover plate via a first set of apertures adjacent to a first side of the continuous solid cover plate and removing cooling air from the pocket via a second set of apertures adjacent to a second side of the continuous solid cover plate, the second side being opposite the first side.

Another featured embodiment according to any of the previous embodiments further comprises the step of cooling an article with the cooling air prior to the supplying step.

In another featured embodiment according to any of the previous embodiments, the cooling air is supplied from a compressor section.

In another featured embodiment according to any of the previous embodiments, the article is an airfoil supported on the platform.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 schematically illustrates an example gas turbine engine.
Figure 2 schematically illustrates a vane assembly for the gas turbine engine of Figure 1.
Figure 3 schematically illustrates a cross-section of a platform of the vane assembly of Figure 2 including a pocket.
Figure 4A schematically illustrates a cross-section of the platform of the vane assembly of Figure 2 including an open pocket.
Figure 4B schematically illustrates a cross-section of the platform of the vane assembly of Figure 2 including a pocket covered by a cover plate.
Figure 5 schematically illustrates another cross-section of the platform and airfoil of the vane assembly of Figures 4A-4B.

### DESCRIPTION

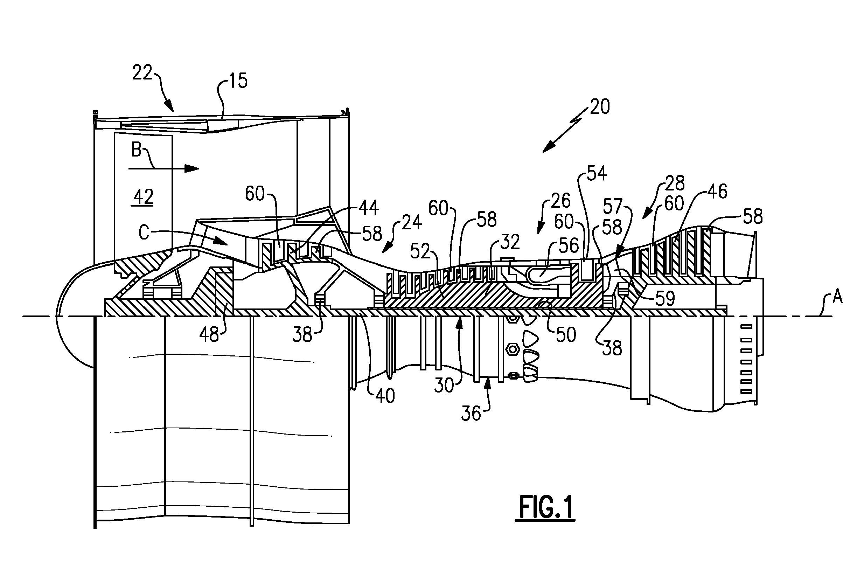

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures and geared-based engine that may or may not have a fan section.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5. The "Low corrected fan tip speed" as disclosed herein according to one non-limiting embodiment is less than about 1150 ft / second.

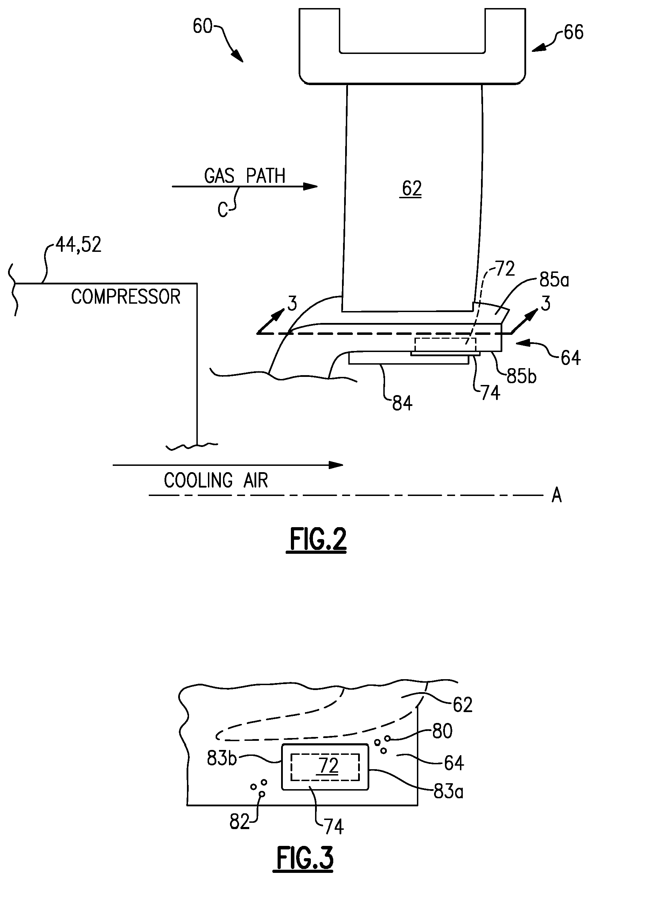

The high and low pressure compressors 44, 52 and the high and low pressure turbines 46, 54 may include alternating rows of rotating blade assemblies 58 and stationary vane assemblies 60. The designs of the blade assemblies 58 and vane assemblies 60 can differ between the compressor 44, 52 and the turbine 46, 54. A representative vane assembly 60 is shown in Figure 2. The vane assembly 60 of Figure 2 includes an airfoil 62 supported between first and second platforms 64, 66. However, in another example, the airfoil 62 may be cantilever-mounted on one of the first and second platforms 64, 66. In one example, the first platform 64 is radially inward from the second platform 66 with respect to the engine axis A (Figure 1). In the examples of Figures 2-5, the first platform 64 is shown. However, it is to be understood that the below description is applicable to the second platform 66 as well.

Figure 3 shows a cross-section of the platform 64 along the section line 3-3 in Figure 2. The platform 64 includes a pocket 72 adjacent a footprint of the airfoil 62. A cover plate 74 covers the pocket 72. The cover plate 74 is continuous and solid. That is, the cover plate is free of any openings through which gas from the pocket 72 can escape. The cover plate 74 can be bonded to the platform 64 over the pocket 72 so as to seal the pocket 72, for example, by welding, brazing, or the like. Therefore, the pressure inside the pocket 72 when covered by the cover plate 74 can be higher than the pressure outside the pocket 72.

In the example of Figures 2-3, the pocket 72 is substantially rectangular. However, in another example, the pocket can be another shape. The pocket 72 can be formed in the platform 64 during the process of casting the platform 64. In another example, the pocket 72 can be formed or by machining, for example by electrical discharge machining (EDM). In one example, the pocket 72 is formed by tooling used to cast the platform 64.

Cooling air enters the pocket 72 via one or more inlet apertures 80 in the platform 64 and exits the pocket 72 via one or more outlet apertures 82 in the platform 64. The inlet apertures 80 are adjacent a first side 83a of the pocket 72 and cover plate 74, and the outlet apertures 82 are adjacent a second side 83b of the pocket 72 and cover plate 74 opposite the first side 83a. The cooling air can be cooling air that is used to cool the airfoil 62. The apertures 80, 82 may be, for example film cooling holes. The outlet apertures 82 are open to the exterior of the platform 62.

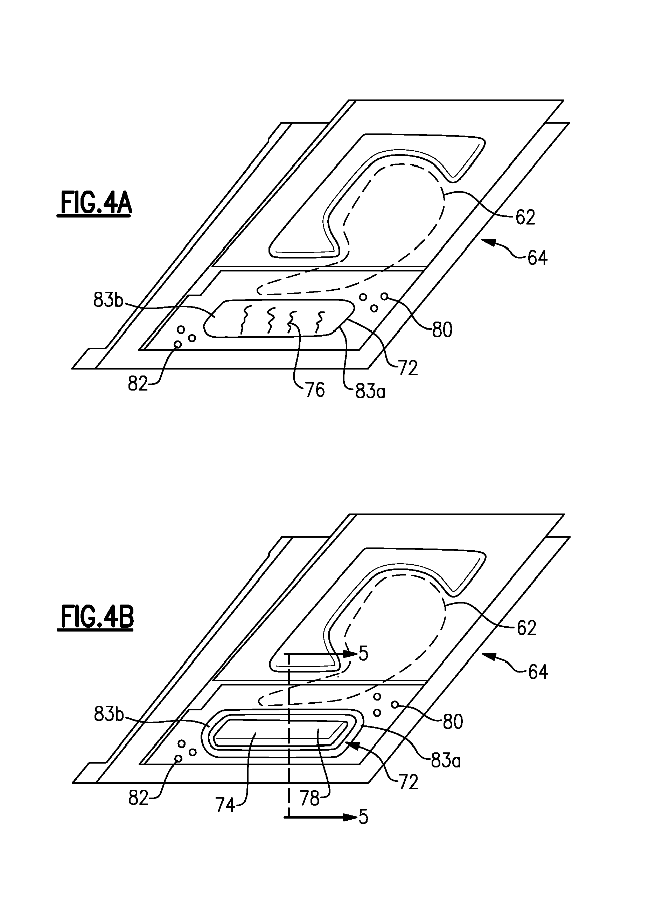

In a modified example shown in Figure 4A, the pocket 72 is shown open. In this further example, the pocket 72 includes one or more heat-transfer-enhancing surface features 76. In the example of Figure 4A, the heat-transfer-enhancing surface features 76 are trip strips 76 shown schematically in the internal surface of the pocket 72. The trip strips 76 enhance heat transfer from cooling air in the pocket 72. The trip strips 76 may be ridges that extend obliquely to flow direction through the pocket 72, to turbulate the flow. In other examples, the heat-transfer-enhancing surface features 76 can be pedestals or other types of features. In further examples, where heat transfer is already sufficient, the heat-transfer-enhancing surface features 76 can be excluded.

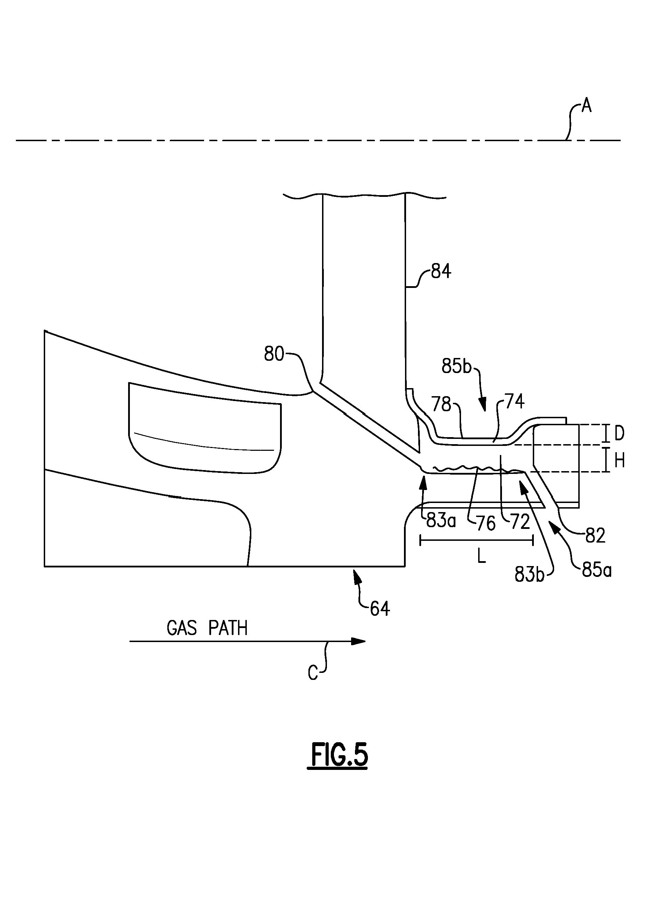

In a modified example shown in Figure 4B, the pocket 72 is covered by the cover plate 74. Figure 5 shows a cross-section of the platform 64 and airfoil 62 along the section line 5-5 shown in Figure 4B. In this example, the cover plate 74 is between approximately 12 and 20 mils (0.30 to 0.51 mm) thick and includes a contour 78 that extends a depth D into the pocket 72 from a surface of the platform 64. The size of the contour 78 defines a height H of the pocket 72. For example, the height H of the pocket 72 is between about 40 and 60 mils (1.02 to 1.52 mm), and is substantially uniform along a length L of the pocket 72 (Figure 5).

Figure 5 shows a cross-section of the the platform 64 and airfoil 62 along the line 5-5 (Figure 4B). The core flow gas path C is adjacent a radially outward side 85a of the platform 64 with respect to the engine axis A, and the pocket 72 is in on a radially inward side 85b of the platform 64 with respect to the engine axis A. In the example, the inlet aperture 80 opens at an inlet on the radially inward side 85b of the platform 64 and extends across a rail 84 of the platform 64. At the opposed outlet end, the aperture 80 opens into the pocket 72. In one embodiment, a total cross-section of apertures 80, 82 opening into the pocket 72 is less than approximately 30% of a cross-section of the pocket 72 in order to maintain a high pressure in the pocket 72.

In one embodiment, the vane assembly 60 is in one of the low pressure and high pressure turbines 46, 54 and cooling air for impingement cooling the airfoil 62 and for cooling the platform 64 via the pocket 72 is supplied from one of the high or low pressure compressors 44, 52, respectively.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An airfoil (62), comprising:
a platform (64) including a pocket (72);
a continuous solid cover plate (74) bonded over the pocket (72); and
a plurality of apertures (80, 82) in the platform (64) in fluid communication with the pocket (72) and adjacent the continuous solid cover plate (74).

2. The airfoil of claim 1, wherein the cover plate (74) includes a contour (78) extending into the pocket (72) to define a height (H) of the pocket (72).

3. The airfoil of claim 1 or 2, wherein a total cross-section of the plurality of apertures (80, 82) is less than approximately 30% of a cross-section of the pocket (72).

4. The airfoil of any preceding claim, wherein the plurality of apertures (80, 82) comprises a first set of apertures (80) adjacent a first side (83a) of the cover plate (74) and a second set of apertures (82) adjacent a second side (83b) of the cover plate (79), the second side (83b) being opposite the first side (83a).

5. The airfoil of any preceding claim, wherein the pocket (72) includes a heat-transfer-enhancing surface feature (76).

6. The airfoil of any preceding claim, wherein a height (H) of the pocket (72) is substantially uniform.

7. A gas turbine engine (20), comprising:
a compressor section (24);
a turbine section (28) downstream from the compressor section (24); and
a combustor section (26) in communication with the compressor section (24) and the turbine section (28);
wherein at least one of the compressor and turbine sections (24, 28) includes a platform (64) including a pocket (72) in a first side (85a) of the platform (64), an airfoil (62) extending from a second side (85b) of the platform (64) opposite the first side (85a), a continuous solid cover plate (74) bonded over the pocket (72), and a plurality of apertures (80, 82) in the platform (64) adjacent the continuous solid cover plate (74) in fluid communication with the pocket (72).

8. The gas turbine engine of claim 7, wherein the plurality of apertures (80, 82) comprises a first set of apertures (80) adjacent a first side (83a) of the cover plate (74) and a second set of apertures (82) adjacent a second side (83b) of the cover plate (74), the second side (83b) being opposite the first side (83a).

9. The gas turbine engine of claim 8, wherein cooling air is supplied to the first set of apertures (80) from the compressor section (24).

10. The gas turbine engine of any of claims 7 to 9, wherein the first side (85a) of the platform (64) is radially inward from the second side (85b) with respect to a longitudinal axis (A) of the gas turbine engine (20).

11. The gas turbine engine of any of claims 7 to 10, wherein the platform (64) is a first platform, and further comprising a second platform (66), the airfoil (62) supported between the first and second platforms (64, 66), wherein, optionally, the first platform (64) is radially inward from the second platform (66) with respect to a longitudinal axis (A) of the gas turbine engine.

12. A method of cooling an article (62) of a gas turbine engine (20), comprising the steps of:
supplying cooling air to a pocket (72) in a platform (64) covered by a continuous solid cover plate (74) via a first set of apertures (80) adjacent to a first side (83a) of the continuous solid cover plate (74); and
removing cooling air from the pocket (72) via a second set of apertures (82) adjacent to a second side (83b) of the continuous solid cover plate (74), the second side (83b) being opposite the first side (83a).

13. The method of claim 12, further comprising the step of cooling an article (62) with the cooling air prior to the supplying step.

14. The method of claim 12 or 13, wherein the cooling air is supplied from a compressor section (24).

15. The method of any of claims 12 to 14, wherein the article is an airfoil (62) supported on the platform (64).
